# EUROPEAN PATENT SPECIFICATION

(11) **EP 0 845 393 B1**
(45) Date of publication and mention of the grant of the patent: **19.09.2001**
(21) Application number: 97120616.4
(22) Date of filing: 24.11.1997
(51) Int. Cl.: B60R 21/32

(54) **A safety device for a motor vechicle**
Sicherheitsvorrichtung für Kraftfahrzeuge
Dispositif de sécurité pour véhicule automobile

(30) Priority: 27.11.1996 GB 9624645
(43) Date of publication of application: 03.06.1998
(73) Proprietor: AUTOLIV DEVELOPMENT AKTIEBOLAG, 447 83 Vargarda (SE)
(72) Inventor: Rottman, Frank, 44269 Dortmund (DE)
(74) Representative: Frankland, Nigel Howard

(56) References cited:
- EP-A- 0 577 988
- DE-A- 19 614 365
- PATENT ABSTRACTS OF JAPAN vol. 95, no. 8, 29 September 1995 & JP 07 137600 A (KANSEI CORP.), 30 May 1995,
- PATENT ABSTRACTS OF JAPAN vol. 96, no. 6, 28 June 1996 & JP 08 040184 A (SENSOR TECHNOL KK), 13 February 1996,

## Description

**THE PRESENT INVENTION** relates to a safety device for a motor vehicle. The safety device may comprise an air-bag or a seat belt pre-tensioner.

Many vehicles are provided with safety devices in the form of air-bags or seat belt pre-tensioners, which are electrically activated or triggered in the event that an accident should arise. Typically, electricity is applied to a squib of a pyrotechnic device. The electricity flowing through the squib causes the temperature of part of the squib to rise, thus igniting the pyrotechnic material within the pyrotechnic device. The pyrotechnic device may deploy a safety arrangement such as an air-bag or a seat belt pre-tensioner.

Since a reliable source of electrical energy is essential to the satisfactory operation of such a device, the safety device may be provided with a capacitor to store electricity that will be utilised, if an accident arises, to ignite the squib of the pyrotechnic device to deploy the safety arrangement such as an air-bag, or a seat belt pre-tensioner. It is important that the capacitor should be charged to an adequate level, even if the capacitor is relatively old, so that sufficient energy is stored in the capacitor to activate the pyrotechnic device.

It is to be appreciated that motor vehicles may have a useful life of twenty years or more. During such a period of time, a capacitor may deteriorate substantially, the performance of the capacitor towards the end of the twenty-year term being very different to the performance of the capacitor when new.

It is, of course, possible to devise an electronic circuit which charges the capacitor in such a way that the capacitor will be adequately charged even when the performance of the capacitor has deteriorated towards the end of its life. This is, however, wasteful and will mean that the capacitor may well be overcharged when the performance of the capacitor is good, at the beginning of its useful life. This over-charging of the capacitor may well hasten the deterioration in the performance of the capacitor.

EP 0 577 988 A1 discloses an electric device for controlling a safety system for a motor vehicle, the electric device comprising a circuit having a capacitor, a charging and discharging device for the capacitor and a measurement device for measuring the voltage applied to a squib. There is also a capacitance measuring circuit to measure the capacitance of a capacitor. The squib is used to ignite a pyrotechnic material within a pyrotechnic device in the safety system.

The present invention seeks to provide an improved safety device in which the above-noted disadvantage is overcome.

According to this invention there is provided a safety device for a motor vehicle, the safety device incorporating electrical means to actuate or deploy the safety device, said electrical means comprising at least one capacitor, and a power source to charge the capacitor, wherein a capacitance measuring circuit is provided to measure the capacitance of the capacitor, wherein a control arrangement is provided to control the power source to charge the capacitor so that the capacitor is charged to a voltage which is dependent upon the measured capacitance of the capacitor.

Preferably the control arrangement incorporates a comparator, the comparator comparing a voltage derived from the capacitor with a reference voltage, the reference voltage being selected in dependence upon the capacitance of the capacitor.

Conveniently the means to select the reference voltage comprise a plurality of rails each carrying a different respective voltage and means selectively to connect a selected one of the rails to said comparator.

Advantageously a plurality of capacitors are provided, multiplexing means being provided to sequentially charge the capacitors, further multiplexing means being provided to sequentially connect the comparator to selected reference voltages.

In a preferred embodiment, the or each capacitor is connected in a respective series connection between switch means, closable in response to an accident situation, a resistance, forming part of a squib to ignite a pyrotechnic device, and further switch means closable in response to a predetermined situation.

Preferably the further switch means comprises a current regulator, the current regulator permitting a current to flow in response to a signal indicative of an increased probability that an accident will occur.

Conveniently the signal indicative of an increased probability that an accident will occur is generated by an acceleration sensor.

Advantageously the first switch means comprise a transistor switch, the control electrode of each switch being adapted to receive potential, in response to an accident situation, from a further capacitor, the further capacitor having a relatively low capacitance as compared with the capacitance of the capacitors in said series connections, means being provided to discharge the capacitors when the vehicle is not operational, the arrangement being such that said further capacitor is discharged relatively swiftly.

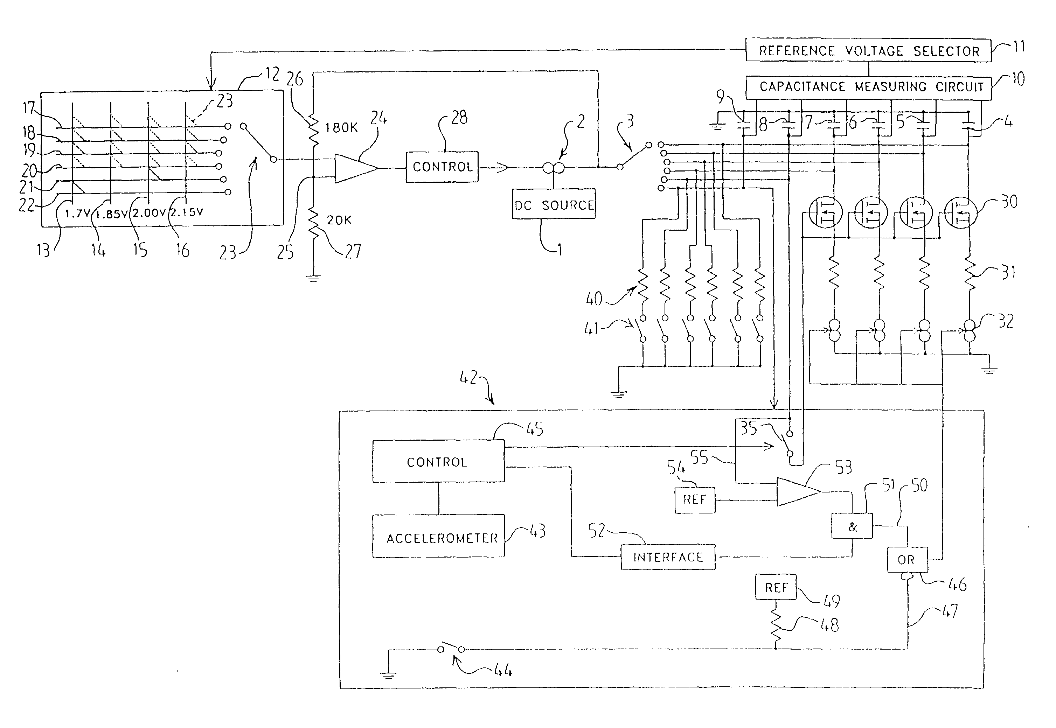

In order that the invention may be more readily understood, and so that further features thereof may be appreciated, the invention will now be described, by way of example, with reference to the accompanying drawing which is a circuit and block diagram of a safety device provided in a motor vehicle.

It is to be appreciated that in the described embodiment of the invention a plurality of capacitors are provided. Four capacitors are provided which store energy which, in the event that an accident arises, is discharged through resistors which ignite pyrotechnic devices. It is consequently important that these four capacitors each store an adequate charge.

As will become clear from the following description, a capacitance measuring circuit is provided which is adapted to measure the capacitance of each of the four capacitors. In dependence upon the measured capacitance of each capacitor, a reference voltage selector selects, for each capacitor, a reference voltage. The capacitor is then charged until the charge present on the capacitor has a predetermined relationship to the selected reference voltage.

Consequently, when the capacitor is new, and has a high capacitance, a relatively low reference voltage may be selected, meaning that the capacitor is charged to a relatively low voltage. However, because the capacitor has a high capacitance, an adequate charge will be maintained on the capacitor. On the other hand, when the capacitor is old, and therefore has a lower effective capacitance, a higher reference voltage will be selected, meaning that the capacitor will be charged to a higher voltage to ensure that the capacitor still maintains an adequate charge.

Referring to the drawing, a DC source 1 supplies power to a current source 2 which supplies current through a multiplexing switch 3 sequentially to a plurality of capacitors 4 to 9. One terminal of each capacitor is connected to earth. The other terminal of each capacitor is connected to a capacitance measuring circuit 10. A separate capacitance measuring circuit may be provided to measure the capacitance of each capacitor, or a single capacitance measuring circuit may be utilised with an appropriate multiplexing switch.

The capacitance measuring circuit is connected to a reference voltage selector 11. The reference of voltage selector 11 controls a reference voltage generator 12. The reference voltage generator comprises four rails 13,14,15,16 which carry respectively the reference voltages 1.7 volts, 1.85 volts, 2.0 volts and 2.15 volts. The reference voltage generator 12 incorporate six transverse rails 17 to 22.

Switch means are provided which are selectively operable to connect the rails 17 to 20 to the rails 13 to 16. These switches are identified in the drawing by dotted lines 23. The reference voltage selector 11 will selectively close the switches 23, in response to the measured capacitance of the capacitors 4 to 7 so that an appropriate reference voltage is applied to each of the rails 17 to 20. The rail 21 is connected to the 2.0 volt rail 15. The rail 22 is connected to the 1.7 volt rail 13.

The rails 17 to 22 are associated with a multiplexing switch 23, so that one rail can be selected. The multiplexing switches 3 and 23 are activated to operate in synchronism.

The multiplexing switch 23 is connected to one input of a comparator 24, the other input of which is connected to a node 25 between a 180k resistor 26 and a 20k resistor 27 which are connected between the multi-plexing switch 3 and earth.

When it is desired to charge capacitors, for example when the arrangement is initially activated, the capacitance measuring circuit 10 will initially determine the capacitance of the capacitor 4. The reference voltage selector will subsequently close a selected switch 23 so that the rail 17 is connected to a selected one of the reference voltage rails 13 to 16. Assuming that the capacitor 4 is relatively new, and thus has a high capacitance, the switch connecting the rail 17 to the rail 13 carrying the reference voltage 1.7 volts will be closed. Alternatively, if the capacitor 4 is very old, and only has a low capacitance, then the switch connecting the rail 17 to the reference voltage rails 16 carrying 2.15 volts would be closed.

Assuming, for the sake of the present description, that the capacitor is relatively new, and the switch connecting the rail 17 to the rail 13 is closed, 1.7 volts would be present on the rail 17. The multiplexing switches 23 and 3 are both located in their upper-most positions as illustrated.

With the apparatus in this condition, the reference voltage of 1.7 volts is passed, by the multiplexing switch 3 to one input of the comparator 24. Initially this is higher than the potential reference at the node 25. The comparator 24 thus activates the control circuit 28 which in turn activates the current source 2.

The current source 2 steps-up the voltage supplied by the DC source 1. The DC source 1 may only be a 12 volt source, but the output of the current source 2 may be relatively high, for example, in excess of 20 volts. Current from the current source 2 passes to the capacitor 4 and charges up the capacitor. The potential present on the capacitor passes to the resistive bridge 25,27 and the potential present at the node 25 is one-tenth of the voltage present on the capacitor. When the potential present at the node 25 is 1.7 volts, that is to say when the capacitor has been charged to 17 volts, the comparator provides an output signal to the control 28 which ceases operation of the current source 2.

The procedure may be repeated with respective capacitors 5, 6 and 7, with the multiplexing switches being moved one position downwards, for example at a rate of 70 kHz, following the charging of each capacitor. The capacitors 8 and 9 may finally be charged, but it is to be appreciated here that the capacitor 8 will be charged to a predetermined potential of 20 volts and the capacitor 9 will be charged to a predetermined potential of 17 volts because the rail 21 is permanently connected to the reference rail 15 and because the rail 22 is permanently connected to the reference rail 13.

The capacitance measuring circuit may, however, measure the capacitance of a different capacitor at predetermined intervals, for example every ten seconds. Once the capacitance has been measured, which takes a very brief period of time, appropriate reference voltages are selected by the selector 11, and the appropriate reference voltage is thus applied to the comparator 24. The charging rate is thus much higher than the measuring rate.

When all the capacitors have been charged, the cycle of operation is repeated, thus frequently topping up any charge that may have leaked away. Thus, the capacitors are continually recharged.

It is to be appreciated that the capacitors 4 to 7 are relatively large capacitors, whereas the capacitors 8 and 9 are relatively small capacitors.

The capacitors 4 to 7 are each connected in series with a respective field effect transistor 30, a resistance 31 forming the operative part of a squib adapted to ignite a pyrotechnic charge forming part of a safety device such as an air-bag, and a controllable current source 32 and earth.

As will be described hereinafter, should an accident arise, the field effect transistors will be rendered conductive. The current source 32 will also be activated so that a predetermined current flows from each capacitor through the respective field effect transistor 30 and resistor 31 and current source 32 to earth. It is preferred to utilise a controllable current source 32, so that a constant current will run through the resistor 31. If a further field effect transistor were utilised instead of the current source 32, with both the field effect transistors being made conductive in response to an accident arising, the current discharge from the capacitance would be such that the field effect transistors would be damaged. By utilising the arrangement described, it is to be appreciated that the field effect transistor 30 will not be damaged and may be re-used, since the level of current flowing will be controlled by the controllable current source.

It is to be observed that the capacitor 8 is connected by means of a switch 35 to the gates of the field effect transistors 30. In a manner that will be described hereinafter, when an accident is detected the switch 35 is closed, and the potential present on the capacitor 8 is applied to the gates of the field effect transistors 30, thus rendering those transistors conductive.

At this stage, it is pointed out that the leads connecting each of the capacitors 4 to 9 to the multiplexing switch 3 are also each individually connected to a respective series connection as resistor 40 and a switch 41, to earth. It is to be appreciated that when the switches 41 are closed, any charge present on the capacitors 4 to 9 will be dissipated to earth through the resistors 40.

Since the charge present on the capacitors 4 to 7 inclusive is a relatively high charge, the resistors 40 through which these capacitors are discharged to earth are selected to have a relatively high value, so that the capacitors 4 to 7 can be discharged to earth relatively slowly, thus not damaging the capacitors. Since the capacitors 8 and 9 are of a relatively low value, the resistors associated with the capacitors 8 and 9 may be of a relatively low value, enabling the capacitors 8 and 9 to be discharged relatively swiftly.

When a vehicle in which the safety device is fitted is not in use, the switches 41 will be closed. Thus, at the end of a journey, when the driver removes the ignition key from the vehicle, the switches 41 will be closed. The capacitor 8, being of a relatively low value and being connected to earth through a resistor of relatively low value will be totally discharged in a very brief period of time. Consequently, once the capacitor 8 has been discharged, it will not be possible to apply a potential to the gates of the field effect transistors 30 even if the switch 35 should inadvertently be closed. This means that the risk of accidental deployment of the safety device is minimised even though there will be a substantial charge remaining on the capacitors 4 to 7 inclusive, since it may take several seconds for the charge on these capacitors to drain away to earth.

The capacitor 9 is present to supply an energy back-up for the managing control arrangement 42 that will now be described.

In order to ensure that the safety devices controlled by the squibs which incorporate the resistors 31 are only deployed at an appropriate instant, in the described arrangement, two sensors are provided. One sensor is an accelerometer 43 which senses acceleration of the vehicle in which the safety arrangement is provided, and which generates an output signal when an acceleration in excess of a predetermined acceleration is sensed. The second sensor is a so-called arming sensor which is illustrated as switch 44. The switch 44 is only closed when the arrangement is to be armed. The switch 44 may thus be closed when there is an increased probability that an accident will occur. The switch 44 may thus be closed in response to an acceleration sensor responsive to a relatively low level of acceleration.

The accelerometer 43 is connected to a control arrangement 45. When an acceleration in excess of a predetermined minimum is sensed by the accelerometer, the control device 45 closes the switch 35, thus rendering the field effect transistors 30 conductive. The current sources 32 are controlled by a signal from an OR-gate 46. The OR-gate 46 provides an appropriate signal to activate the current source 32 in response to one of the inputs of the OR-gate having a signal thereon.

An inverted input 47 to the OR-gate is connected by means of a resistor 48 to a reference voltage 49, and is also connected, by means of the switch 44 to earth. It is thus to be appreciated that when the safing sensor closes the switch 44, the potential that would otherwise be applied to the input 47 of the OR-gate 46 will be changed thus activating the current source 32.

The other input 50 to the OR-gate 46 is connected to the output of an AND-gate 51, having two inputs. One input to the AND-gate 51 is an interface 52 connected to the control device 45. The other input to the AND-gate 51 is the output of a comparator 53, the inputs of which comprise a reference voltage 54 and an input 55 which is connected to the capacitor 8. This part of the circuit becomes operative when it is desired to test the current sources 32. The current sources 32 can only be tested when the capacitor 8 has been totally discharged, since otherwise there is a risk that the safety devices activated by the squib 31 would be inadvertently deployed.

Consequently, when it is desired to test the current sources 32, initially the capacitor 8 is discharged. When the capacitor 8 has been discharged, the comparator 53 provides an appropriate output which is supplied to the AND-gate 51. Also, when the current regulators are to be tested, an appropriate signal from the control device 45 is passed through the inter-face to the AND-gate 51, and the AND-gate 51 thus provides a signal on the output 50 which is, of course, an input to the OR-gate 46. The current sources can, in this situation, be activated.

## Claims

1. A safety device for a motor vehicle, the safety device incorporating electrical means to actuate or deploy the safety device, said electrical means comprising at least one capacitor (4,5,6,7), and a power source (1,2) to charge the capacitor (4,5,6,.7) wherein a capacitance measuring circuit (10) is provided to measure the capacitance of the capacitor (4,5,6,7) and **characterised in that** a control arrangement (11-24) is provided to control the power source (1,2) to charge the capacitor so that the capacitor (4,5,67) is charged to a voltage which is dependent upon the measured capacitance of the capacitor (4,5,6,7).

2. A safety device according to Claim 1 wherein the control arrangement (11-24) incorporates a comparator (24), the comparator (24), comparing a voltage derived from the capacitor (4,5,6,7) with a reference voltage (12), the reference voltage (12) being selected (11) in dependence upon the capacitance of the capacitor (4,5,6,7).

3. A safety device according to Claim 2 wherein the means to select the reference voltage (11) comprise a plurality of rails (17-22) each carrying a different respective voltage and means (23) selectively to connect a selected one of the rails to said comparator (24).

4. A safety device according to Claim 2 or Claim 3 wherein a plurality of capacitors (4,5,6,7) are provided, multiplexing means (3) being provided to sequentially charge the capacitors, further multiplexing means (23) being provided to sequentially connect the comparator (24) to selected reference voltages (11).

5. A safety device according to any one of the preceding Claims wherein the or each capacitor (4,5,6,7) is connected in a respective series connection between first switch means (30), closable in response to an accident situation, a resistance (31), forming part of a squib to ignite a pyrotechnic device, and further switch means (32) closable in response to a predetermined situation.

6. A safety device according to Claim 5, wherein the further switch means (32) comprise a current source, the current source permitting a current to flow in response to a signal (44) indicative of an increased probability that an accident will occur.

7. A safety device according to Claim 6 wherein the signal (44) indicative of an increased probability that an accident will occur is generated by an acceleration sensor.

8. A safety device according to any one of Claims 5 to 7 wherein the first switch means (30) comprise a transistor switch, the control electrode of each switch being adapted to receive potential, in response to an accident situation, from a further capacitor (8), the further capacitor (8) having a relatively low capacitance as compared with the capacitance of the capacitors in said series connections, means (40,41) being provided to discharge the capacitors (4,5,6,7,8) when the vehicle is not operational, the arrangement being such that said further capacitor (8) is discharged relatively swiftly.

## Patentansprüche

1. Eine Sicherheitsvorrichtung für ein Kraftfahrzeug, wobei die Sicherheitsvorrichtung ein elektrisches Mittel beinhaltet, um die Sicherheitsvorrichtung auszulösen oder einzuschalten, das elektrische Mittel mindestens einen Kondensator (4, 5, 6, 7) und eine Stromquelle ( 1, 2), um die Kapazität (4,5,6,7) zu laden, umfaßt, wobei ein Kapazitätsmeßkreis (10) vorhanden ist, um dic Kapazität des Kondensator (4, 5, 6, 7) zu messen, **dadurch gekennzeichnet, daß** eine Kontrolleinrichtung (11-24) vorhanden ist, um die Stromquelle (1, 2) zu steuern, um den Kondensator zu laden, so daß der Kondensator (4, 5, 6, 7) bis zu einer Spannung geladen wird, die abhängig ist von der gemessenen Kapazität des Kondcnsators (4,5,6,7).

2. Sicherheitsvorrichtung nach Anspruch 1, **dadurch gekennzeichnet, daß** die Kontrolleinrichtung (11-24) einen Komparator (24) umfaßt, der eine von dem Kondensator (4, 5,6,7) abgeleitete Spannung mit einer Referenzspannung (12) vergleicht, wobei die Referenzspannung (12) abhängig von der Kapazität des Kondensator (4, 5, 6, 7) gewählt wird.

3. Sicherheitsvorrichtung nach Anspruch 2, **dadurch gekennzeichnet, daß** das Mittel zum Auswählen der Referenzspannung (11) eine Vielzahl von Leitungen (17-22) umfaßt, an denen jeweils eine andere Spannung anliegt, und Mittel (23) zur wahlweisen Verbindung einer ausgewählten Leitung mit dem Komparator (24).

4. Sicherheitsvorrichtung nach Anspruch 2 oder 3, **dadurch gekennzeichnet, daß** eine Vielzahl von Kondensatoren (4, 5, 6, 7) vorhanden sind sowie Mehrkanalmittel (3), um die Kondensatoren sequentiell zu laden, und weitere Mehrkanalmittel (23), um den Komparator (24) sequentiell mit ausgewählten Referenzspannungen (11) zu verbinden.

5. Sicherheitsvorrichtung nach einem der vorangehenden Ansprüche, **dadurch gekennzeichnet, daß** der oder jeder Kondensator (4, 5,6, 7) in Reihenschaltung zwischen einem ersten Schaltmittel (30), das als Reaktion auf eine Unfallsituation schließbar ist, einem Widerstand (31), der einen Teil einer Zündkapsel bildet, um eine pyrotechnische Vorrichtung zu zünden, und einem weiteren Schaltmittel (32), das als Reaktion auf eine zuvor bestimmte Situation schließbar ist, angeschlossen ist.

6. Sicherheitsvorrichtung nach Anspruch 5, **dadurch gekennzeichnet, daß** das weitere Schaltmittel (32) eine Stromquelle umfaßt, die einen Stromfluß als Reaktion auf ein Signal (44) zuläßt, das eine erhöhte Wahrscheinlichkeit anzeigt, daß ein Unfall auftreten wird.

7. Sicherheitsvorrichtung nach Anspruch 6, **dadurch gekennzeichnet, daß** das Signal (44), welches eine erhöhte Wahrscheinlichkeit anzeigt, daß ein Unfall auftreten wird, durch einen Beschleunigungssensor erzeugt wird.

8. Sicherheitsvorrichtung nach einem der Ansprüche 5 bis 7, **dadurch gekennzeichnet, daß** das erste Schaltmittel (30) einen Transistorschalter umfaßt, wobei die Steuerelektrode eines jeden Schalters dafür ausgelegt ist, um ein Potential als Reaktion auf eine Unfallsituation von einem weiteren Kondensator (8) zu erhalten, der weitere Kondensator (8) eine kleinere Kapazität als die Kapazität der in der genannten Reihenschaltung geschalteten Kondensatoren hat, wobei Mittel (40, 41) vorhanden sind, um die Kondensatoren (4, 5, 6, 7, 8) zu entladen, wenn das Fahrzeug nicht in Betrieb ist, wobei die Anordnung derart ist, daß der weitere Kondensator (8) relativ schnell entladen wird.

## Revendications

1. Dispositif de sécurité pour un moteur de véhicule, le dispositif de sécurité incorporant un moyen électrique pour actionner ou déployer le dispositif de sécurité, ledit moyen électrique comprenant au moins un condensateur (4, 5, 6, 7), et une source d'énergie (1, 2) pour charger le condensateur (4, 5, 6, 7), dans lequel on prévoit un circuit (10) de mesure de capacité pour mesurer la capacité du condensateur (4, 5, 6, 7), et **caractérisé en ce que** l'on prévoit un agencement de commande (11 - 24) pour commander la source d'énergie (1, 2) pour charger le condensateur, de façon à charger le condensateur (4, 5, 6, 7) à une tension qui dépend de la capacité mesurée du condensateur (4, 5, 6, 7).

2. Dispositif de sécurité selon la revendication 1, dans lequel l'agencement de commande (11 - 24) incorpore un comparateur (24), le comparateur (24) comparant une tension dérivée du condensateur (4, 5, 6, 7) avec une tension de référence (12), la tension de référence (12) étant choisie (11) en fonction de la capacité du condensateur (4, 5, 6, 7).

3. Dispositif de sécurité selon la revendication 2, dans lequel le moyen servant à choisir la tension de référence (11) comprend plusieurs pôles (17 - 22) transportant chacun une tension respective différente et un moyen (23) pour connecter sélectivement l'un, choisi, des pôles avec ledit comparateur (24).

4. Dispositif de sécurité selon la revendication 2 ou la revendication 3, dans lequel plusieurs condensateurs (4, 5, 6, 7) sont prévus, un moyen de multiplexage (3) étant prévu pour charger séquentiellement les condensateurs, un moyen de multiplexage supplémentaire (23) étant prévu pour connecter séquentiellement le comparateur (24) à des tensions de référence choisies (11).

5. Dispositif de sécurité selon l'une quelconque des revendications précédentes, dans lequel le, ou chaque, condensateur (4, 5, 6, 7) est connecté, dans un montage en série respectif, entre un premier moyen de commutation 30, qui peut se fermer en réponse à une situation d'accident, une résistance (31) faisant partie d'un détonateur servant à amorcer un dispositif pyrotechnique, et un moyen de commutation supplémentaire (32) qui peut se fermer en réponse à une situation prédéterminée.

6. Dispositif de sécurité selon la revendication 5, dans lequel le moyen de commutation supplémentaire (32) comprend une source de courant, la source de courant permettant qu'un courant circule en réponse à un signal (44) indicatif d'une probabilité accrue de survenue d'un accident.

7. Dispositif de sécurité selon la revendication 6, dans lequel le signal (44) indicatif d'une probabilité accrue de survenue d'un accident est engendré par un capteur d'accélération.

8. Dispositif de sécurité selon l'une quelconque des revendications 5 à 7, dans lequel le premier moyen de commutation (30) comprend un commutateur à transistor, l'électrode de commande de chaque commutateur étant apte à recevoir un potentiel, en réponse à une situation d'accident, d'un condensateur supplémentaire (8), le condensateur supplémentaire (8) ayant une capacité relativement basse par comparaison avec la capacité des condensateurs desdits montages en série, un moyen (40, 41 ) étant prévu pour décharger les condensateurs (4, 5, 6, 7, 8) lorsque le véhicule n'est pas opérationnel, l'agencement étant tel que ledit condensateur supplémentaire (8) se décharge relativement rapidement.
